# EUROPEAN PATENT APPLICATION

(11) **EP 4 729 472 A1**
(43) Date of publication of application: **22.04.2026**
(21) Application number: 24461628.0
(22) Date of filing: 17.10.2024
(51) Int. Cl.: C01B 3/38, C01B 3/48, C01B 13/02, C25B 1/01, C25B 1/02, C25B 1/042, C25B 9/09

(54) **METHOD OF CONVERTING METHANE FROM NATURAL GAS WITH SIMULTANEOUS PRODUCTION OF HYDROGEN AND RECOVERY OF CARBON DIOXIDE AND ITS USE AS A STORAGE OF SURPLUS ENERGY FROM RENEWABLE ENERGY SOURCES**

(71) Applicant: Fuel Cell Poland sp. z o.o., Pulawy (PL)
(72) Inventor: Milewski, Jaroslaw, 05-807 Podkowa Lesna (PL); Martsinchyk, Aliaksandr, 02-672 Warszawa (PL); Sienko, Arkadiusz, 05-822 Milanowek (PL); Szczesniak, Arkadiusz, 05-230 Kobylka (PL); Shuhayeu, Pavel, 03-743 Warszawa (PL)
(74) Representative: AOMB Polska Sp. z.o.o.

(57) **Abstract**

The invention relates to a method of converting methane from a natural gas field with simultaneous production of hydrogen and recovery of carbon dioxide. The method includes the steps of a steam reforming reaction of desulfurized methane in a co-electrolyzer (1), resulting in carbon monoxide and hydrogen; a water gas conversion reaction between carbon monoxide and water, resulting in carbon dioxide and additional hydrogen; a reaction between the carbon dioxide formed in step b) and water, resulting in an additional hydrogen molecule and a carbonate anion; a molten carbonate electrolysis reaction in which the carbonate anion CO₃²⁻ is decomposed, producing oxygen, electrons and carbon dioxide, which is returned to the storage. In addition, the invention relates to the use of this method to store surplus energy from renewable energy sources.

## Description

### Background of the invention

The invention relates to a method of producing hydrogen from natural gas using molten carbonate fuel cell technology with simultaneous storage of recovered carbon dioxide.

### State of the art

CN118702064A relates to a steam reforming hydrogen production system capturing carbon dioxide. The production system includes hydrogenation reactors and desulfurization reactors arranged in series, and the outlet of the desulfurization reactor is connected to the reactor by piping and heat exchangers. The pre-conversion reactor is used for the initial conversion of desulfurized hydrocarbon feedstock to obtain pre-conversion products, and its outlet is connected to the inlet of the steam reforming reactor via a pipeline. The steam reforming reactor receives the pre-conversion product and some of the steam generated by the steam drum and carries out the steam reforming reaction in it. A solid oxide electrolytic cell, which is used to electrolyze the output products of the steam reforming reaction, resulting in pure oxygen in the anode channel and hydrogen-rich gas in the cathode channel. Gases formed after heat exchange are removed from the system and directed to carbon capture and storage (CCS). CN118702064A does not disclose storage of recovered CO₂ in natural gas deposits.

JP2023530357A5 relates to a hydrogen production system. The system includes a prereformer for receiving hydrocarbons and converting them to methane using a prereforming catalyst. The system also includes a membrane reformer that receives methane from the prereformer. The methane is then converted to hydrogen and carbon dioxide. The hydrogen production system includes a hydrogen purification system to produce a hydrogen product containing at least 99.9 molar percent hydrogen. The membrane reformer system can also provide high-purity CO₂. The permeate retentate can undergo cryogenic CO₂ separation, which can produce liquid CO₂ containing high-purity micron-sized CO₂ droplets suitable for storage, transportation and/or further processing. JP2023530357A5 does not disclose storage of recovered CO₂ in natural gas deposits.

TR202319786A2 relates to a process for producing hydrogen using methane and converting waste carbon dioxide into methanol. Methane is subjected to methane steam reforming at high temperature (about 1000°C). This process produces a mixture of 3H₂+CO. This mixture is then directed to a second water spray unit. Here, as a result of an additional reforming process at a lowertemperature (about 400°C), the hydrogen production capacity is increased and a 4H₂+CO₂ gas mixture enriched with carbon dioxide is produced. The produced mixture is passed through a palladium alloy membrane to the next stage. The palladium alloy membrane allows hydrogen molecules to flow through while trapping larger gas molecules such as carbon monoxide and carbon dioxide, so pure hydrogen is separated. The system also separates byproducts such as carbon dioxide, which is routed to a methanol production unit where it is converted to methanol. TR202319786A2 does not disclose the storage of recovered CO₂ in natural gas deposits.

AR123845A1 relates to the generation of white and turquoise hydrogen and the conversion of carbon dioxide (CO₂) into fuels in the production process. The hydrogen is produced in a reactor system, powered by energy obtained from solar, wind, hydraulic or gravity energy, going to a fuel cell or rotary engine. A carbon dioxide filtration, compression and storage system is used during the production process. The recovered carbon dioxide can be used to produce building materials or converted into bioethanol, among other things. AR123845A1 does not disclose the storage of recovered CO₂ in natural gas deposits.

EA202092378A1 relates to a process for producing hydrogen and solid carbon, comprising: a) contacting methane with a catalyst selected from the group consisting of iron, nickel, cobalt or mixtures thereof, in a first reaction zone where the temperature is in the range of 700 to 1200 °C, to produce a first gas stream comprising hydrogen and unreacted methane and a first solid carbon product comprising carbon nanotubes. Then, at least a portion of the carbon nanotubes is separated from the first gas stream, and a portion of the unreacted methane is passed through a second reaction zone comprising a molten salt/metal bed and a hydrogen acceptor. EA202092378A1 does not disclose the production of carbon dioxide or its storage in natural gas deposits.

EP2455336A4 describes a method for producing highly pure hydrogen gas from a low-quality fuel such as low-alloy coal or biomass. The method involves gassing, for example, low-coal as fuel to produce hydrogen. Highly pure hydrogen can be produced by cryogenic separation by: converting the carbon monoxide in the gas mixture into hydrogen and carbon dioxide in the carbon monoxide-vapor conversion reaction as much as possible; then oxidizing the carbon monoxide remaining after the carbon monoxide-vapor conversion reaction to carbon dioxide using a selective carbon monoxide oxidation catalyst, and then separating the hydrogen and carbon dioxide. The carbon dioxide separated from hydrogen is stored using a carbon dioxide storage device. EP2455336A4 does not disclose storage of recovered CO₂ in natural gas deposits.

RU2009136005Arelates to a method for producing hydrogen with complete CO₂ capture and recycling of unreacted methane. The method consists of (a) producing syngas in a steam reformer of a hydrocarbon feedstock in the presence of steam, with the heat required for the reaction being provided by the fuel, (b) steam reforming the syngas obtained in the previous step, yielding a hydrogen stream containing methane and carbon dioxide, (c) carbon dioxide capture, (d) capture and recycling of impurities present in the hydrogen stream. The carbon dioxide capture step is carried out in an amine absorption unit using methyldiethylamine and at least one other amine. RU2009136005A relates to a different method of CO₂ recovery and does not disclose storage of recovered CO₂ in natural gas deposits.

RU2265920C2 relates to a mobile hydrogen power system that allows hydrogen to be supplied to fuel cell vehicles. Fuels that can be used as substances for hydrogen production can be hydrocarbon-based compounds such as city gas, liquefied natural gas, kerosene, gasoline, light oil and hydrocarbon-based compounds that include oxygen, methanol, ethanol, dimethyl ether. Hydrogen production is carried out using a membrane reformer. The vehicle-mounted system absorbs carbon dioxide (CO₂) from the hydrogen production process using CO₂ solvent, which is an absorbent such as amine. The CO₂ solvent is recovered at a recovery station and sent to a purification agent for purification. The carbon dioxide recovered from the solvent is of high purity, so it can be sold. RU2265920C2 does not disclose the storage of recovered CO₂ in natural gas deposits.

US4869894A relates to a method for producing hydrogen. Natural gas or other methane-rich gas mixture is subjected to primary reforming by reaction with steam, followed by secondary reforming by reaction of residual methane with gaseous oxygen, and then CO₂ and other impurities are separated from the primary/secondary reformer effluent. Since after the shift reaction, the only major components are CO₂ and hydrogen, there is very little CH₄ in the resulting gas stream, allowing recovery ofa hydrogen product with high purity and high efficiency. A special vacuum shuttle adsorption sequence used to remove CO₂ from the hydrogen-rich reformer effluent removes only CO₂, enabling high recovery of hydrogen content. US4869894A does not disclose storage of recovered CO₂ in natural gas deposits.

ID2021 PID01765A describes an installation for producing liquid hydrogen. The plant includes a reformer configured to produce gaseous hydrogen by reforming hydrocarbons (methane); a hydrogen condenser configured to produce liquid hydrogen by liquefying gaseous hydrogen; a tank for storing liquid hydrogen; and a heat exchanger configured to cause heat exchange between the vaporized gas formed in the tank and carbon dioxide generated during the gaseous hydrogen production process to liquefy the carbon dioxide. The liquefied carbon dioxide CO₂ is transported to the CCS location, where it is stored underground. ID2021PID01765A does not disclose storage of recovered CO₂ in natural gas deposits.

CN101248004B discloses a method for producing hydrogen. The method uses a reactor containing a catalyst. A mixture of an electrolyte and an oxidizable substrate or fuel, such as methanol, is continuously introduced into the reactor. Hydrogen is continuously released as the substrates pass through the bed. Typically, the reactor is tuned to achieve a high level of fuel conversion. In the method described, carbon dioxide from the displaced syngas reacts with carbonate and water through the reaction CO₂ +K₂CO₃ +H₂O → 2KHCO₃ to form dissolved bicarbonate. CN101248004B does not disclose recovery of pure CO₂ or storage in natural gas deposits.

IN269081B discloses a method of producing gas containing hydrogen. The process includes introducing a process stream including steam and at least one hydrocarbon selected from the group consisting of methane, ethane, propane, butane, pentane and hexane into a plurality of reformer tubes containing a catalyst and subjecting the process stream to a reaction inside the reformer, in the presence of the catalyst, at a temperature in the range of 700°C to 1000°C and a pressure in the range of 2 to 50 atmospheres to form a reformate stream containing hydrogen, carbon monoxide, methane and steam. The reformate stream is then subjected to a shift reaction in the presence of a catalyst at a temperature in the range of 190°C to 500°C and a pressure in the range of 2 to 50 atmospheres to form a second process stream containing carbon dioxide, hydrogen, carbon monoxide and methane. The second process stream is then flushed to form a carbon dioxide-depleted stream and a carbon dioxide-laden flushing stream. The streams are separated to form a product gas containing hydrogen and a product gas containing methane and carbon monoxide. The amount of CO₂ emitted in the hydrogen production process can be effectively reduced by returning it back to the process feed stream. IN269081B does not disclose the storage of CO₂ in natural gas deposits.

JP2007224381A relates to a hydrogen supply system for efficient hydrogen production, hydrogen recovery and carbon dioxide recovery. Natural gas supplied as city gas through a pipeline is supplied to a fuel reformer equipped with a desulfurizer, reformer and CO₂ converter. The fuel reformer produces fuel reformer outlet gas, which is a hydrogen-rich reformed gas consisting of hydrogen, carbon dioxide, water vapor, methane and carbon monoxide. The natural gas, from which the sulfur components have been removed in the desulfurizer, is delivered along with the steam to a reformer filled with a nickel- or ruthenium-based catalyst. The steam reforming reaction of methane, the main component of natural gas, is expressed by the equation CH₄+H₂O→CO+3H₂. The reformer's effluent gas is delivered to the CO shift converter: CO+H₂O→CO₂+H₂. High-purity hydrogen from which impurities have been removed by the hydrogen purifier is delivered to hydrogen storage units. Carbon dioxide produced at the anode is separated in a carbon dioxide recovery unit located next to the anode chamber and recovered as anode chamber outlet gas. JP2007224381A does not disclose storage of CO₂ in natural gas deposits.

JP3671040B2 relates to a hydrogen generator. In a first step, a desulfurization operation of a feedstock gas (e.g., methane) in a desulfurization unit is carried out before steam reforming. The desulfurized feedstock gas is sent to the reforming reactor, which is filled with a suitable reforming catalyst, such as a Ni or Ru-based catalyst, and steam is passed through the feedstock gas for reforming, enabling the reactions: CH₄+H₂O → 3H₂ +CO and CO+H₂O→H₂ +CO₂. Air is introduced into the reformed gas to trigger a reaction to convert CO to CO₂ to produce a hydrogen-based gas essentially free of CO: 2CO+O₂ → 2CO₂. The unit provides a means for recovering carbon dioxide. JP3671040B2 does not disclose storage of CO₂ in natural gas deposits.

US6821501B2 discloses a process and apparatus for producing pure hydrogen by steam reforming. The process integrates steam reforming and a shift reaction to produce pure hydrogen without CO in the hydrogen stream, provides CO₂ capture for sequestration, and uses a steam reforming membrane reactor and is powered by flameless diffuse combustion. The process involves the reaction of steam with a hydrocarbon (methane) at temperatures ranging from about 200°C to about 700°C, at a pressure of about 1 bar to about 200 bar in a reaction zone containing a reforming catalyst, to produce a mixture of hydrogen and carbon dioxide, with a small amount of carbon monoxide. Heat is then supplied to the said reaction zone through the use of flameless distributed combustion, which drives the reaction. The hydrogen formed in the reaction penetrates a selective membrane and is separated from the carbon dioxide and carbon monoxide. The CO₂ recovered from the process can be used for oil recovery, injected into underground formations or converted into a thermodynamically stable solid. The term "underground formations" can mean returning carbon dioxide to urban underground infrastructure, such as natural gas fields.

JP5416513B2 relates to a method for producing hydrogen gas from a low-quality fuel, such as low-quality coal and biomass, and a method for enabling storage of carbon dioxide separated from hydrogen in a supercritical state. The method includes the steps of: a) a heating step, which involves heating the fuel in the presence of steam; b) a conversion step, which involves converting the produced gas obtained in the heating step into carbon dioxide and hydrogen by reacting carbon monoxide and steam; c) a gas separation step, which involves separating the product gas after the conversion step. The carbon dioxide separated from the product gas in the regeneration tower is cooled and then delivered to the supercritical storage device. JP5416513B2 does not disclose storage of CO₂ in natural gas deposits.

AU2003288383A1 describes a method and device for producing hydrogen from hydrocarbon while releasing very low or zero levels of carbon dioxide and impurities. The method involves using oxygen flow to oxidize a portion of the hydrocarbons and providing the heat required to convert, using steam, almost all of the remaining hydrocarbons into hydrogen, carbon monoxide and carbon dioxide. The conversion products are then cooled, followed by hydrogen extraction and condensation of the carbon dioxide, which is stored in liquid form. AU2003288383A1 does not disclose storage of CO₂ in natural gas deposits.

FR3137306B1 discloses a process for valorizing carbon dioxide. The process includes a step of electrolysis of waste gas for recovery, resulting in a leakage containing carbon monoxide that is converted into at least one product selected from methane, dihydrogen and/or hydrocarbons. FR3137306B1 describes capturing carbon dioxide and then releasing it into a trap in old oil and natural gas wells.

CA2973037C is a Chinese patent disclosing a hydrogen production process involving the conversion of fossil methane into carbon monoxide and hydrogen by reforming in a reforming unit. Then, the carbon monoxide is converted through a water gas to carbon dioxide conversion reaction, producing a stream containing carbon dioxide and hydrogen. Then, some of the hydrogen is separated from the non-hydrogen components. The carbon dioxide produced during the hydrogen production process can be recovered and used in a variety of ways, such as used in oil or gas recovery, vented or mixed with another stream and flared and/or put into fermentation along with the purge gas stream. Carbon dioxide can be recovered from any stream containing carbon dioxide produced or derived from a hydrogen production process. CA2973037C does not disclose storage of CO₂ in natural gas deposits.

JP2024126036A is a Japanese patent application relating to a fuel cell system containing a reformer that generates reformed gas containing hydrogen by subjecting crude fuel containing hydrocarbons to a steam reforming reaction, and a fuel electrode to which reformed gas is sent from the reformer. The main body of the fuel cell generates direct current through the fuel cell stack. During reforming, reactions take place: CH₄+H₂O→CO+3H₂ and CO+H₂O→CO₂+H₂. The reformed gas is supplied to the fuel electrode, and the anode exhaust gas is generated by the oxidation reaction: O₂⁻+H₂ →H₂O+2e⁻. A carbon dioxide separation and recovery device is provided in the anode exhaust gas flow path. The carbon dioxide separation and recovery device recovers CO₂, for example, using a carbon dioxide separation membrane or PSA (pressure swing adsorption). JP2024126036A does not disclose storage of recovered CO₂ in natural gas deposits.

WO2023144076A1 is an international patent application, relating to carbon dioxide capture and storage systems. The system includes a variable-pressure adsorption unit for producing product gas and residual gas, containing at least one carbon gas, and a fused carbonate fuel cell having a cathode and an anode for transferring CO₂ from the cathode to the anode, the fuel cell being a multi-stage fuel cell. A fused carbonate fuel cell transfers CO₂ from the cathode to the anode. The CO₂ capture process consists of producing a product gas and a residual gas by variable-pressure adsorption, with the residual gas including at least one carbon dioxide gas; and then feeding at least a portion of the residual gas as an inlet stream to the anode of the molten carbonate fuel cell, the molten carbonate fuel cell being a multi-stage fuel cell, generating electricity and transferring CO₂ from cathode to anode. WO2023144076A1 does not disclose storage of recovered CO₂ in natural gas deposits.

Júlio F. Carneiro, Catarina R. Matos, Serge van Gessel, Opportunities for large-scale energy storage in geological formations in mainland Portugal, Renewable and Sustainable Energy Reviews, Volume 99, 2019, Pages 201-211, ISSN 1364-0321, https://doi.org/10.1016/j.rser.2018.09.036 is a publication on geological formations suitable for large-scale energy storage. The study consisted of identifying suitable porous carrier rocks, salt formations and magmatic rocks that could act as reservoirs for gas (hydrogen or methane) storage, compressed air energy storage, underground pumped hydroelectric power plants and underground thermal energy storage. The technologies with the best potential for application in the Portuguese geological context are CAES (compressed air energy storage) and underground gas storage linked to power-to-gas projects. The publication does not describe the production of pure hydrogen from methane with simultaneous carbon dioxide recovery and storage in natural gas deposits.

Jensen, S. H., Graves, C. R., Mogensen, M. B., Wendel, C., Braun, R. J., Hughes, G., Gao, Z., & Barnett, S. A. (2015). Large-scale electricity storage utilizing reversible solid oxide cells combined with underground storage of CO2 and CH4. Energy & Environmental Science, 8, 2471-2479. https://doi.org/10.1039/C5EE01485A is a publication describing underground storage of compressed CO₂ and CH₄. During electrical storage (electrolysis mode), the compressed, CO₂-rich gas is expanded, mixed with H₂O, heated, and then fed into a ReSOC (reversible solid oxide electrochemical cell), which uses electricity to extract oxygen and produce CH₄-rich fuel gas. Water is condensed and removed from this gas after cooling, and then the CH₄ is finally compressed for storage. During power generation (fuel cell mode), the compressed CH₄-rich fuel gas is expanded, mixed with H₂O, heated and then fed into the ReSOC, which oxidizes the fuel to generate energy and produce a CO₂/H₂O-rich mixture. The H₂O is then condensed after cooling, and the CO₂-rich gas is compressed for storage. The publication does not disclose the production of pure hydrogen from methane with simultaneous carbon dioxide recovery and storage in natural gas deposits.

Giacomo Butera, Søren Hojgaard Jensen, Lasse Rrangaard Clausen, A novel system for large-scale storage of electricity as synthetic natural gas using reversible pressurized solid oxide cells, Energy (2018), doi: 10.1016/j.energy.2018.10.079 is a publication on an electricity storage system that uses pressurized reversible solid oxide cells connected to catalytic reactors to store electricity as synthetic natural gas. The paper reveals the use of a steam reforming reaction: CH₄+H₂O → 3H₂+CO. Another reaction taking place inside sacs (solid oxide cells) is the water gas shift (WGS) reaction, CO + H₂O → H₂ + CO₂. When storing electricity, CO₂ and H₂O are converted to CO and H₂ inside the SOC cells. The cells operate under increased pressure, allowing most of the CO and H₂ to be converted to CH₄ inside the cell. The publication does not disclose the production of pure hydrogen from methane while recovering pure carbon dioxide and storing it in natural gas deposits.

### Subject matter of the invention

The subject matter of the invention is a method of converting methane derived from desulfurized natural gas, with simultaneous production of hydrogen and recovery of carbon dioxide, the method comprising the steps of: a steam reforming reaction of methane in co-electrolyzer 1 which produces carbon monoxide and hydrogen,
a water gas shift conversion reaction involving the reaction of carbon monoxide with water which produces carbon dioxide and additional hydrogen, a reaction between the carbon dioxide formed in step b) and water, which produces an additional hydrogen molecule and a carbonate anion, a carbonate electrolysis reaction in which the carbonate anion CO₃²⁻ is decomposed, producing oxygen, electrons, and carbon dioxide, which is returned to the storage.

Preferably, the reaction in step a) takes place according to equation (I).

Preferably, the reaction in step b) takes place according to equation (II).

Preferably, the reaction in step c) takes place according to equation (IV).

Preferably, the reaction in step d) takes place according to equation (V).

Preferably, all reaction steps are carried out under identical conditions of temperature and pressure.

Preferably, catalysts such as nickel, ruthenium, rhodium, platinum are used in reaction a), with nickel being the most preferred catalyst.

Preferably, steps a), b) and c) are carried out at the fuel electrode, while step d) is carried out at the air electrode.

Preferably, the energy required for operation in the co-electrolyzer is supplied from renewable sources.

Preferably, the content of sulfur compounds in natural gas does not exceed 100 ppm.

It is also an object of the invention to use the method according to the invention for storing surplus energy from renewable energy sources.

The purpose of the method according to the invention is to influence the transformation of the energy sector towards low-carbon and sustainable systems, which is particularly important in the context of increasing global pressure to reduce the carbon footprint and achieve climate neutrality. In particular, the purpose of the method according to the invention is to efficiently convert methane and carbon dioxide, the main components of natural gas, into hydrogen without emitting harmful gases into the atmosphere.

The method according to the invention is adapted to the requirements of the new energy and climate policy of the European Union, and can find application in sectors related to advanced solutions supporting green transformation.

The method according to the invention enables efficiently convert methane and carbon dioxide, the main components of natural gas, into hydrogen without emitting harmful gases. "White" hydrogen obtained by the system can be used as a fuel for energy, transportation or industrial purposes, supporting the development of the hydrogen economy.

In the context of the present invention, the term "white hydrogen" is to be understood as hydrogen which is obtained from geological natural sources.

The method according to the invention allows CO₂ to be efficiently separated from hydrogen, allowing it to be stored or used in other industrial processes, helping to reduce greenhouse gas emissions. In addition, the method can utilize energy from renewable sources, such as solar or wind power, further enhancing its environmental performance and enabling it to more fully exploit the potential of these sources.

The produced hydrogen can be injected into existing gas networks, allowing the use of current natural gas distribution systems for hydrogen transportation and storage. Using existing gas infrastructure to transport and store hydrogen significantly reduces the cost of technological and infrastructural adaptation, which accelerates the deployment of new technologies and enables faster economic and environmental benefits.

The present method has an exceptionally high efficiency of converting electrical energy to chemical energy and vice versa, far surpassing traditional energy storage methods such as batteries or water electrolyzers. The round-trip efficiency can reach up to 80%, which is significantly higher compared to other known technologies.

With the ability to store excess electricity produced from renewable sources (such as solar or wind) in the form of hydrogen, this technology overcomes one of the main limitations of RES (Renewable Energy Sources), which is the instability of energy supply.

The efficient separation of CO₂ allows it to be stored or used in other industrial processes, reducing carbon dioxide emissions. This is a key aspect from the perspective of reducing greenhouse gas emissions and contributes to the fight against global warming. This in turn supports global climate goals, such as limiting global warming to below 2 degrees Celsius, according to the Paris Agreement.

The method allows direct use of existing gas infrastructure to distribute and store the hydrogen produced. This avoids the costs associated with building new facilities, significantly lowering the entry barriers for new energy technologies.

The aforementioned advantages make carbonate fuel cell technology not only more efficient, but also more sustainable and economically attractive compared to standard solutions currently in use on the market.

Using this technology, industries can not only increase their energy efficiency, but also reduce their dependence on fossil fuels, which is crucial in the context of increasing regulations on harmful gas emissions and climate change. The technology, with its advantages, has the potential to transform the energy sector into a more sustainable and environmentally responsible one.

The method involves using molten carbonate electrolysis to efficiently produce pure hydrogen from a natural gas mixture. The process allows for the separation and storage of carbon compounds (CO and CO₂) back in the reservoir, which minimizes emissions of harmful gases and increases energy efficiency. The end product, "white" hydrogen, provides clean energy, significantly reducing the energy industry's carbon footprint. This innovation offers new opportunities for sustainable development and responds to the growing demand for clean energy sources.

### Brief description of the drawing

The invention will be further illustrated in an preferred example of implementation with reference to the attached drawing, in which:

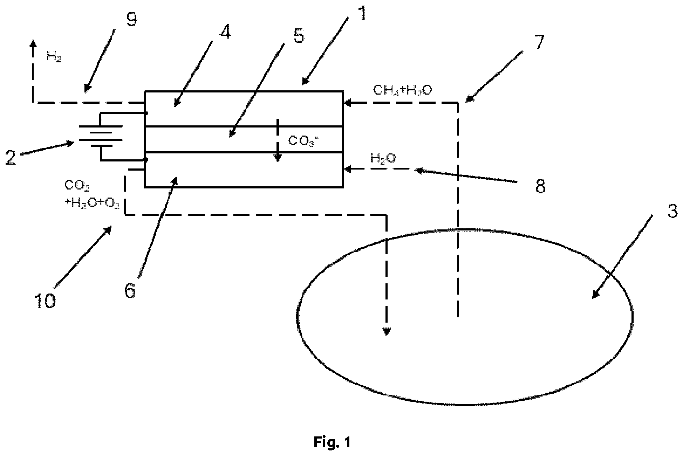

Fig. 1 shows a diagram of the installation used to carry out the method according to the invention.

The following designations are used in the attached drawing:
1 - molten carbonate co-electrolyzer, 2 - energy source, 3 - geological natural source. 4 - fuel electrode, 5 - electrolyte, 6 - air electrode, 7 - fuel electrode inlet stream, 8 - air electrode inlet stream, 9 - fuel electrode outlet stream, 10 - air electrode outlet stream.

### Detailed description of the invention

The method involves the conversion of natural gas containing methane with simultaneous recovery of carbon dioxide. In order to ensure the efficiency and productivity of the process, it is advantageous if the input natural gas contains as few impurities as possible, in particular as few as possible sulfur compounds, which cause degradation of the co-electrolyzer cell shortening its lifespan. The limit value for natural gas impurities is 100 ppm. Above this value, the efficiency of the process may decrease and degradation of the co-electrolyzer cell 1 may occur.

In the first step, a steam reforming reaction of methane is carried out. The methane is supplied from a geological natural source 3 and is supplied via an inlet stream 7 to the fuel electrode 4. The reforming reaction takes place at the fuel electrode 4 (Hydrogen evolution electrode in electrolysis (HEE)) and follows the equation:

CH₄+H₂O 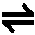 CO+3H₂ (I)

Reaction (I) takes place at a temperature of about 600-900°C, at a pressure in the range of 1 to 15 bar, where methane reacts with water vapor to produce carbon monoxide (CO) and molecular hydrogen (H₂). The catalyst for the reaction is nickel. Other metals, such as platinum, rhodium or ruthenium, can also be used as catalysts. Next, a water gas shift conversion (WGS) reaction, designated as reaction (II), takes place at fuel electrode 4:

CO+H₂O 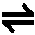 CO₂+H₂ (II)

In reaction (II), carbon monoxide (CO) reacts with water to release additional molecular hydrogen (H₂) and carbon dioxide (CO₂). Reaction (I) and reaction (II) result in a total of 4 hydrogen molecules, as shown in reaction (III) below:

CH₄+2H₂O 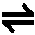 CO₂+4H₂ (III)

Then, there is a process of co-electrolysis via electricity supplied through energy source 2 to the co-electrolyzer cell 1, where water is decomposed into hydrogen and oxygen, which in combination with CO₂ forms a carbonate anion, according to reaction (IV):

H₂O+CO₂+2e⁻ 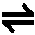 H₂ + CO₃²⁻ (IV)

The separated carbonate anion is moved to the air electrode 6 (Oxygen evolution electrode in electrolysis (OEE)) by means of electricity, according to the relationship described by Faraday's law: I=2n_{CO2}F, in which *n*_{*CO*₂} expresses the molar flow of carbon dioxide to the air electrode, where the decomposition of the carbonate anion into carbon dioxide and oxygen takes place, according to equation (V):

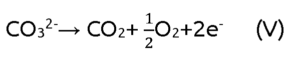

Between the fuel electrode 4 and the air electrode 6 there is an electrolyte 5. A vapor stream is supplied to the air electrode 6 by means of an inlet stream 8, serving to remove CO₂ from the air electrode 6. Carbon dioxide and oxygen are released into the flow, which is then directed back to the storage by means of an outlet stream 10 of the air electrode 6.

Preferably, the electrolyte is a mixture of two or three compounds selected from the group consisting of potassium carbonate (K₂CO₃), lithium carbonate (Li₂CO₃) and sodium carbonate (Na₂CO₃) in any proportions. More preferably, the electrolyte is a mixture of lithium carbonate and potassium carbonate in a ratio of 62:38.

The process thus yields a total of 5 moles of hydrogen from 1 mole of methane. The hydrogen is discharged from the fuel electrode via outlet stream 9.

Advantageously, the energy required for the co-electrolyzer 1 is supplied from renewable sources (photovoltaics) or nuclear power. This allows the storage of excess electricity produced from renewable sources in the form of hydrogen, which in turn makes it possible to overcome one of the main limitations of RES, which is the instability of energy supply.

Sources of renewable energy according to the present invention are solar energy (obtained by means of photovoltaic panels), wind energy, hydropower or geothermal energy. In a particularly preferred example, the source of renewable energy according to the present invention is solar energy.

All of the above-mentioned reactions (I-V) take place in a single reaction medium and are therefore carried out in the same temperature and pressure conditions.

The subject matter of the invention is also shown in examples 1 to 3 described below.

### EXAMPLE 1

A steam reforming reaction of methane was carried out. The reforming reaction took place at fuel electrode 4 and is in accordance with equation (I). Reaction (I) was carried out in the temperature range from 500 to 700°C, at a pressure of 1 to 3 bar, during which the reaction of methane with steam produced carbon monoxide (CO) and molecular hydrogen (H₂). Nickel was used as a catalyst for the reaction. In the next step, a water gas shift conversion (WGS) reaction was carried out on fuel electrode 4, accordingto equation (II), duringwhich the reaction of carbon monoxide (CO) with water produced additional molecular hydrogen (H₂) and carbon dioxide (CO₂). Reaction (I) and reaction (II) produce a total of 4 hydrogen molecules accordingto equation (III). Then, with the help of electricity supplied through energy source 2 to the co-electrolyzer cell 1, where water breaks down into hydrogen and oxygen, which combined with CO₂ forms a carbonate anion accordingto reaction (IV). As a result of this reaction (IV), an additional hydrogen molecule is formed. The separated carbonate anion was moved to the air electrode 6. Reaction according to equation (V) was carried out on the air electrode 6, in which the decomposition of the carbonate anion produced carbon dioxide and oxygen. The carbon dioxide, along with oxygen, was released into the flow, which was then directed back into the storage via the outlet stream from fuel electrode 9. All process reactions were carried out under the same conditions of temperature and pressure.

### EXAMPLE 2

A steam reforming reaction of methane was carried out in an external chamber integrated with a co-electrolyzer. The reforming reaction took place on the catalytic surface and is consistent with equation (I). Reaction (I) was carried out in the temperature range from 600 to 900°C, at a pressure of 3 to 5 bar, during which the reaction of methane with steam produced carbon monoxide (CO) and molecular hydrogen (H₂). Nickel was used as a catalyst for the reaction. In the next step, the water gas shift conversion (WGS) reaction was carried out according to equation (II), duringwhich the reaction of carbon monoxide (CO) with water produced additional molecular hydrogen (H₂) and carbon dioxide (CO₂). Reaction (I) and reaction (II) produce a total of 4 hydrogen molecules, according to equation (III). This gas mixture is directed to the fuel electrode 4 and then, with the help of electricity supplied through energy source 2 to the co-electrolyzer cell 1, the water breaks down into hydrogen and oxygen, which, combined with CO₂, forms a carbonate anion according to reaction (IV). As a result of this reaction (IV), an additional hydrogen molecule is formed. The separated carbonate anion was moved to the air electrode 6. Reaction according to equation (V) was carried out on the air electrode 6, in which the decomposition of the carbonate anion produced carbon dioxide and oxygen. Carbon dioxide together with oxygen were released into the flow, which was then directed back to the storage by the outlet stream from the fuel electrode 9. All reactions of the process were carried out under the same temperature and pressure conditions.

### EXAMPLE 3

A steam reforming reaction of methane was carried out in an external chamber integrated with a co-electrolyzer. The reforming reaction took place on the catalytic surface and is in accordance with equation (I). Reaction (I) was carried out in the temperature range from 600 to 900°C, at a pressure of 3 to 5 bar, during which the reaction of methane with steam produced carbon monoxide (CO) and molecular hydrogen (H₂). Nickel was used as a catalyst for the reaction. In the next step, the water gas shift conversion (WGS) reaction was carried out according to equation (II), during which the reaction of carbon monoxide (CO) with water produced additional molecular hydrogen (H₂) and carbon dioxide (CO₂). Reaction (I) and reaction (II) produce a total of 4 hydrogen molecules, according to equation (III). This gas mixture is directed to the fuel electrode 4, where at a temperature of 500 to 700°C and at a pressure of 1 to 3 bar with the help of electricity supplied through energy source 2 to the co-electrolyzer cell 1, water breaks down into hydrogen and oxygen, which combined with CO₂ forms a carbonate anion according to reaction (IV). As a result of this reaction (IV), an additional hydrogen molecule is formed. The separated carbonate anion was moved to the air electrode 6. Reaction according to equation (V) was carried out on the air electrode 6, in which the decomposition of the carbonate anion produced carbon dioxide and oxygen. The carbon dioxide along with the oxygen was released into the flow, which was then directed back into the storage via the outlet stream from fuel electrode 9.

## Claims

1. A method of converting methane derived from desulfurized natural gas, with simultaneous production of hydrogen and recovery of carbon dioxide, comprising the subsequent steps of:
a) a steam reforming reaction of methane in a co-electrolyzer (1), which produces carbon monoxide and hydrogen,
b) a water gas shift conversion reaction involving the reaction of carbon monoxide with water, which produces carbon dioxide and additional hydrogen,
c) a reaction between the carbon dioxide formed in step b) and water, which produces an additional hydrogen molecule and a carbonate anion,
d) a molten carbonate electrolysis reaction in which the carbonate anion CO₃²⁻ is decomposed, producing oxygen, electrons and carbon dioxide, which is returned to the storage.

2. Method according to claim 1 **characterized in that**, the reaction in step a) takes place according to equation (I).

3. The method according to any of the claims 1 and 2, **characterized in that** the reaction in step b) takes place according to equation (II).

4. The method according to any of the claims 1-3, **characterized in that** the reaction in step c) takes place according to equation (IV).

5. The method according to any of the claims 1-4, **characterized in that** the reaction in step d) takes place according to equation (V).

6. The method according to any of the claims 1-5, **characterized in that** all reaction steps are carried out under identical conditions of temperature and pressure.

7. The method according to any of the claims 1-6, **characterized in that** the reaction a) uses catalysts such as nickel, ruthenium, rhodium, platinum, most preferably catalyst being nickel.

8. The method according to any of the claims 1-7, **characterized in that** the steps a), b) and c) are carried out at the fuel electrode (4), while step d) is carried out at the air electrode (6).

9. The method according to any of the claims 1-8, **characterized in that** the energy required for operation in the co-electrolyzer (1) is supplied from renewable sources.

10. The method according to any of the claims 1-9, **characterized in that** the content of sulfur compounds in natural gas does not exceed 100 ppm.

11. Use of the method according to claims 1-10 for storing surplus energy from renewable sources.
